# EUROPÄISCHE PATENTSCHRIFT

(11) **EP 4 168 749 B1**
(45) Veröffentlichungstag und Bekanntmachung des Hinweises auf die Patenterteilung: **11.09.2024**
(21) Anmeldenummer: 21734070.2
(22) Anmeldetag: 14.06.2021
(51) Int. Cl.: G01F 1/58

(54) **MAGNETISCH-INDUKTIVE DURCHFLUSSMESSSONDE**
MAGNETICALLY INDUCTIVE FLOW METER
DÉBITMÈTRE MAGNÉTO-INDUCTIF

(30) Priorität: 17.06.2020 DE 102020116004
(43) Veröffentlichungstag der Anmeldung: 26.04.2023
(73) Patentinhaber: Endress + Hauser Flowtec AG, 4153 Reinach (CH)
(72) Erfinder: TSCHUDIN, Beat, 4153 Reinach (CH); WORRETH, Bruno, 68480 Kiffis (FR); BIER, Thomas, 4125 Riehen (CH); WEISS, Steffen, 79639 Grenzach-Wyhlen (DE); MARIAGER, Simon, 4059 Basel (CH)
(74) Vertreter: Penner, Paul
(86) Internationale Anmeldenummer: PCT/EP2021/065978
(87) Internationale Veröffentlichungsnummer: WO 2021/254965

(56) Entgegenhaltungen:
- EP-A1- 0 892 251
- DE-A1- 102008 035 724
- DE-A1- 3 712 948
- US-A- 4 214 477
- US-A- 4 774 844
- US-B2- 9 534 943

## Beschreibung

Die Erfindung betrifft eine magnetisch-induktive Durchflussmesssonde zum Einsetzen in eine Öffnung einer von einem fließfähigen Medium durchströmten Rohrleitung und zum Ermitteln einer strömungsgeschwindigkeitsabhängigen Messgröße eines fließfähigen Mediums.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit *u* und, mit Hinzunahme eines bekannten Rohrquerschnitts, der Volumendurchfluss *V̇* ermittelt werden.

Im Gegensatz zu einem magnetisch-induktiven Durchflussmessgerät, welches ein Messrohr zum Führen des Mediums mit angebrachter Vorrichtung zum Erzeugen eines das Messrohr durchdringenden Magnetfeldes und Messelektroden umfasst, werden magnetisch-induktive Durchflussmesssonden mit ihrem üblicherweise kreiszylindrischen Gehäuse in eine seitliche Öffnung einer Rohrleitung eingeführt und fluiddicht fixiert. Ein Messrohr ist nicht mehr notwendig. Die eingangs erwähnten Messelektroden und Vorrichtung zum Erzeugen des das Messrohr durchdringenden Magnetfeldes auf der Mantelfläche des Messrohres entfällt, und wird durch ein im Inneren des Gehäuses und in unmittelbarer Nähe zu den Messelektroden angeordnete Vorrichtung zur Erzeugung des Magnetfeldes ersetzt, welche so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an unterschiedlichen magnetisch-induktiven Durchflussmesssonden.

Die EP 0 892 251 A1 beispielsweise lehrt eine magnetisch-induktive Durchflussmesssonde mit einer das Gehäuse endseitig abschließenden Frontplatte - welche als Kugelkalotte ausgebildet ist - und eine im Gehäuse angeordnete Vorrichtung zum Erzeugen eines die Frontplatte durchsetzenden Magnetfeldes. Die Vorrichtung umfasst eine Spule, die auf einen zylindrischen Spulenkern aufgeschoben ist, welcher als Spulenträger fungiert und Feldrückführungskörper. Zwei stiftförmige Messelektroden sind in der Frontplatte befestigt und werden durch die Vorrichtung zum Erzeugen des Magnetfeldes in Längsrichtung des Gehäuses verdeckt. Somit lassen sich die Messelektroden bei der Herstellung der Durchflussmesssonde nur sehr aufwendig mit einer Messschaltung über elektrische Leiter elektrisch verbinden. Eine ähnliche Vorrichtung ist auch in DE 3712948 A1 offenbart.

Der Erfindung liegt die Aufgabe zugrunde eine magnetisch-induktive Durchflussmesssonde bereitzustellen, die zwar einfacher herzustellen ist, jedoch keine Einschnitte in der Messperformance hinnehmen müssen.

Die Aufgabe wird gelöst durch die magnetisch-induktive Durchflussmesssonde nach Anspruch 1.

Die erfindungsgemäße magnetisch-induktive Durchflussmesssonde zum Einsetzen in eine Öffnung einer von einem fließfähigen Medium durchströmten Rohrleitung und zum Ermitteln einer strömungsgeschwindigkeitsabhängigen Messgröße eines fließfähigen Mediums umfasst:
- ein Gehäuse, welches dazu eingerichtet ist mit dem Medium beaufschlagt zu werden,
   wobei das Gehäuse einen Gehäuseendabschnitt aufweist,
   wobei das Gehäuse eine Gehäusehülle umfasst, die ein Gehäuseinneres begrenzt;
- zwei im Gehäuseendabschnitt, insbesondere diametral angeordnete Messelektroden zum Bilden eines galvanischen Kontaktes mit dem Medium und zum Abgreifen einer induzierten Spannung im fließenden Medium,
   wobei die zwei Messelektroden jeweils ein Messelektrodenkontaktierungselement aufweisen, welches in das Gehäuseinnere hineinragt;
   wobei eine Gehäuselängsebene durch die zwei Messelektrodenkontaktierungselemente verläuft;
- ein Vorrichtung zum Erzeugen eines den Gehäuseendabschnitt durchsetzenden Magnetfeldes,
   wobei die Vorrichtung im Gehäuseinneren angeordnet ist,
   wobei die Vorrichtung eine Spulenanordnung und einen Feldführungskörper umfasst,
   wobei die Spulenanordnung eine Öffnung umfasst,
   wobei der Feldführungskörper einen Spulenkern umfasst, welcher sich durch die Öffnung erstreckt,
   wobei der Feldführungskörper zwei mit dem Spulenkern verbundene Feldführungskörperschenkel aufweist, welche sich bis zu einem Frontabschnitt des Gehäuses erstrecken und dazu eingerichtet sind, als Feldrückführung zu dienen,
   wobei eine orthogonale Projektion der Messelektroden und eine orthogonale Projektion des Feldführungskörpers auf eine Querschnittsebene senkrecht zu einer Längsachse des Gehäuses disjunkt sind.

Durch eine derartige Anordnung der Messelektroden relativ zum Feldführungskörper bleiben die Messelektroden, insbesondere die jeweiligen Messelektrodenkontaktierungselemente frei zugänglich und werden nicht durch einzelne Komponenten der Vorrichtung zum Erzeugen des Magnetfeldes verdeckt. Dies ermöglicht eine montagefreundlichere, d.h. einfachere und schnellere Kontaktierung der Messelektrodenkontaktierungselemente mit entsprechenden elektrischen Leitern, die dazu dienen die Messelektroden mit einer Messchaltung zu verbinden. Zudem ergibt sich durch die als Feldführungsschenkel ausgestalteten Feldrückführungen eine insgesamte kompaktere und schlankere Vorrichtung zum Erzeugen des Magnetfeldes.

Ein Messelektrodenkontaktierungselement kann eine an einem Ende einer Messelektrode angeordnete, separate Komponente sein oder durch den Endabschnitt der Messelektrode gebildet sein.

Des Weiteren ermöglicht eine derartige Anordnung die Verwendung von größeren Elektroden.

Vorteilhafte Ausgestaltung der Erfindung sind Gegenstand der Unteransprüche.

Eine Ausgestaltung sieht vor, dass eine Feldführungskörperlängsebene durch die zwei Feldführungskörperschenkel verläuft,
wobei die Gehäuselängsebene und Feldführungskörperlängsebene einen Winkel *β* aufspannen mit 0° < *β* ≤ 90°, insbesondere 10° ≤ *β* ≤ 60° und bevorzugt 25° ≤ *β* ≤ 45°.

Eine derartige Ausgestaltung hat den Vorteil, dass trotz der einfacheren Montage noch ein Magnetfeld mit einer ausreichend großen magnetischen Induktion für eine Durchflussmessung erzeugt wird. Aus 25° ≤ *β* ≤ 45° ergibt sich ein besonders vorteilhafter Winkelbereich, welcher eine besondere Balance zwischen Erreichbarkeit der Messelektrodenkontaktierungselemente beim Kontaktieren und der Stärke der magnetischen Induktion schafft.

Eine Ausgestaltung sieht vor, dass der Feldführungskörperschenkel zumindest teilweise streifenförmig ausgebildet ist, und/oder
wobei der Feldführungskörper genau zwei senkrecht zueinanderstehende Spiegelebenen aufweist,
wobei eine der zwei Spiegelebenen und die Feldführungskörperlängsebene übereinstimmen.

Eine Ausgestaltung sieht vor, dass die Spulenanordnung eine Spule, einen Spulenhalter und zwei Spulenkontaktierungselemente umfasst,
wobei die Spulenkontaktierungselemente jeweils mit einem auf den Spulenhalter aufgewickelten und die Spule bildenden Spulendraht verbunden sind,
wobei die zwei Spulenkontaktierungselemente am Spulenhalter, insbesondere an einer dem Gehäuseendabschnitt abgewandten Seite angeordnet sind,
wobei eine Spulenanordnungslängsebene durch die zwei Spulenkontaktierungselemente verläuft,
wobei eine Feldführungskörperlängsebene durch die zwei Feldführungskörperschenkel verläuft,
wobei die Feldführungskörperlängsebene und die Spulenanordnungslängsebene einen Winkel *α* aufspannen mit 0° ≤ *α* ≤ 90°, insbesondere
   *α* ≥ 50° und bevorzugt *α* ≥ 75°.

Die Feldführungskörperschenkel erstrecken sich ausgehend vom Gehäusefrontabschnitt parallel zum Spulenkern und laufen an einem Endabschnitt des Spulenkerns zusammen, wo sie mechanisch mit dem Spulenkern verbunden sind. Ein Versetzen der Spulenlängsebene um einen Winkel *α* relativ zur Feldführungskörperlängsebene führt zu dem technischen Effekt, dass die Spulenkontaktierungselemente nicht durch den Feldführungskörper, insbesondere durch die Feldführungskörperschenkel in Längsrichtung der Gehäuselängsachse verdeckt werden und somit freigelegt sind zum montagefreundlicheren Kontaktierung mit elektrischen Leitern zum Verbinden mit einer Betriebsschaltung.

Eine Ausgestaltung sieht vor, dass eine Schnittgerade der Gehäuselängsebene und der Feldführungskörperlängsebene mit einer Längsachse des Gehäuses übereinstimmen, und/oder
wobei eine Schnittgerade der Gehäuselängsebene und der Spulenanordnungslängsebene mit der Längsachse des Gehäuses übereinstimmen.

Eine Ausgestaltung sieht vor, dass das magnetisch-induktive Durchflussmessgerät umfasst:
- eine Messschaltung zum Ermitteln einer an den zwei Messelektroden induzierten Messspannung,
   wobei die Messschaltung im Gehäuseinneren angeordnet und mit den Messelektrodenkontaktierungselementen insbesondere mechanisch und elektrisch trennbar verbunden ist,
   wobei die Messschaltung auf einer Leiterplatte angeordnet ist,
   wobei die Leiterplatte komplementär zu den Messelektrodenkontaktierungselementen ausgebildete Messelektrodengegenkontaktierungselemente aufweist,
   wobei die Messelektrodengegenkontaktierungselemente mit den Messelektrodenkontaktierungselementen eine Steckverbindung bilden.

Der Vorteil der kabellosen Lösung liegt neben der Reduzierung der Montageschritte, in einer einfacheren, weniger fehleranfälligeren Kontaktierung der Messelektroden und in einer einfacheren Montage der Messschaltung. Es reicht nunmehr aus, beim Anordnen der Messschaltung an den Gehäuseendabschnitt und die Messelektroden, die Messelektrodengegenkontaktierungselemente auf bzw. in die Messelektrodenkontaktierungselemente zu stecken. Dadurch bildet sich nicht nur eine elektrische Verbindung, sondern auch eine mechanische Verbindung aus, welche die Leiterplatte in einer vorgesehenen Montierposition hält.

Eine Ausgestaltung sieht vor, dass die magnetisch-induktive Durchflussmesssonde umfasst:
- eine Betriebsschaltung zum Betreiben der Spulenanordnung,
   wobei die Betriebsschaltung im Gehäuseinneren angeordnet und mit der Spulenanordnung, insbesondere mechanisch und elektrisch trennbar verbunden ist,
   wobei die Betriebsschaltung auf einer Leiterplatte angeordnet ist,
   wobei die Leiterplatte komplementär zu den Spulenkontaktierungselementen ausgebildete Spulengegenkontaktierungselemente aufweist,
   wobei die Spulengegenkontaktierungselemente mit den Spulenkontaktierungselementen eine Steckverbindung bilden.

Der Vorteil der Ausgestaltung ist neben der Reduzierung der Montageschritte, eine einfachere und weniger fehleranfälligere Kontaktierung der Spulenanordnung und Montage der Betriebsschaltung. Es reicht nunmehr aus, beim Anordnen der Betriebsschaltung an die Spulenanordnung, die Spulengegenkontaktierungselemente auf bzw. in die Spulenkontaktierungselemente zu stecken. Dadurch bildet sich nicht nur eine elektrische Verbindung, sondern auch eine mechanische Verbindung aus, welche die Leiterplatte in einer vorgesehenen Montierposition hält.

Gemäß einer Ausgestaltung ist die Betriebsschaltung und die Messschaltung auf genau einer Leiterplatte angeordnet und die Leiterplatte mit den Messelektrodengegenkontaktierungselementen und Spulengegenkontaktierungselementen versehen, so dass beim Montieren der Leiterplatte das Bilden der Steckverbindungen zwischen Messelektrodenkontaktierungselementen mit Messelektrodengegenkontaktierungselementen und zwischen Spulenkontaktierungselementen mit Spulengegenkontaktierungselementen in einem einzelnen Montageschritt erfolgt.

Eine Ausgestaltung sieht vor, dass die Leiterplatte zwei Leiterplattenschenkel, mit jeweils einem Leiterplattenschenkelendabschnitt aufweisen,
wobei sich die Leiterplattenschenkel ausgehend von einem Leiterplattengrundkörper in Richtung Frontabschnitt des Gehäuses erstrecken,
wobei die zwei Messelektrodengegenkontaktierungselemente jeweils in einem der zwei Leiterplattenschenkelendabschnitte angeordnet sind.

Die Ausgestaltung hat den Vorteil, dass die auf der Leiterplatte angeordnete Messschaltung in einem Gehäuseabschnitt hinter der Vorrichtung zum Erzeugen des Magnetfeldes anordenbar und gleichzeitig eine Kontaktierung mit den im Gehäuseendabschnitt befindlichen Messelektroden bzw. Messelektrodenkontaktierungselementen realisiert werden kann. Dies erlaubt zudem eine insgesamt schlankere Ausgestaltung der magnetisch-induktiven Durchflussmesssonde ohne Nachteile bei der Montage der Einzelkomponenten bei der Herstellung der magnetisch-induktiven Durchflussmesssonde zu verursachen.

Eine Ausgestaltung sieht vor, dass die zwei Spulengegenkontaktierungselemente am Leiterplattengrundkörper angeordnet sind.

Gemäß einer Ausgestaltung sind zusätzlich die zwei Messelektrodengegenkontaktierungselemente jeweils in einem der zwei Leiterplattenschenkelendabschnitte angeordnet. Diese Ausgestaltung hat den Vorteil, dass die Messelektroden und die Spulenanordnung in einem einzelnen Montageschritt - nämlich beim Anordnen der Leiterplatte - mit der Messschaltung und der Betriebsschaltung verbunden werden kann. Das reduziert die Anzahl der Montageschritte und somit auch die Fehleranfälligkeit beim Montieren der Einzelkomponenten.

Eine Ausgestaltung sieht vor, dass die Leiterplatte zwei voneinander abgewandte Seiten aufweist,
wobei die Spulengegenkontaktierungselemente jeweils auf unterschiedlichen Seiten der Leiterplatte angeordnet sind, und/oder
wobei die Messelektrodengegenkontaktierungselemente jeweils auf unterschiedlichen Seiten der Leiterplatte angeordnet sind.

Diese Ausgestaltung hat den Vorteil, dass somit der Winkel *β* möglichst klein gewählt werden kann, ohne dass sich die Messelektrodengegenkontaktierungselemente und die Feldführungskörperschenkeln einander beeinträchtigen.

Eine Ausgestaltung sieht vor, dass die Leiterplatte zwei voneinander abgewandte Seiten aufweist,
wobei die Spulengegenkontaktierungselemente jeweils auf gleichen Seiten der Leiterplatte angeordnet sind, und/oder
wobei die Messelektrodengegenkontaktierungselemente jeweils auf gleichen Seiten der Leiterplatte angeordnet sind.

Der Vorteil an der Ausgestaltung liegt in der mit der durch die Anordnung der Gegenkontaktierungselemente auf einer Seite der Leiterplatte erreichte Unabhängigkeit von den Toleranzen der Leiterplattendicke. Aus dem Grund ist es auch vorteilhaft, wenn die Spulengegenkontaktierungselemente und die Messelektrodengegenkontaktierungselemente auf einer gemeinsamen Seite der Leiterplatte angeordnet sind. In dem Fall ist es vorteilhaft, wenn die Winkel *α* und *β* gleich sind.

Die Erfindung wird anhand der nachfolgenden Figuren näher erläutert. Es zeigt:
Fig. 1: eine perspektivische und teilweise geschnittene Darstellung einer magnetisch-induktiven Durchflussmesssonde nach dem Stand der Technik;
Fig. 2: eine perspektivische Ansicht auf eine erste Ausgestaltung der erfindungsgemäßen magnetisch-induktiven Durchflussmesssonde;
Fig. 3: eine perspektivische Ansicht auf die erste Ausgestaltung mit angeordneter Leiterplatte;
Fig. 4: eine Draufsicht auf eine orthogonale Projektion der Messelektroden und des Feldführungskörpers auf eine Querschnittsebene senkrecht zur Längsachse des Gehäuses der ersten Ausgestaltung;
Fig. 5: eine Draufsicht auf eine orthogonale Projektion der Messelektroden und des Feldführungskörpers auf eine Querschnittsebene senkrecht zur Längsachse des Gehäuses einer zweiten Ausgestaltung; und
Fig. 6: eine schematische Darstellung der erfindungsgemäßen magnetisch-induktiven Durchflussmesssonde in einer Rohrleitung.

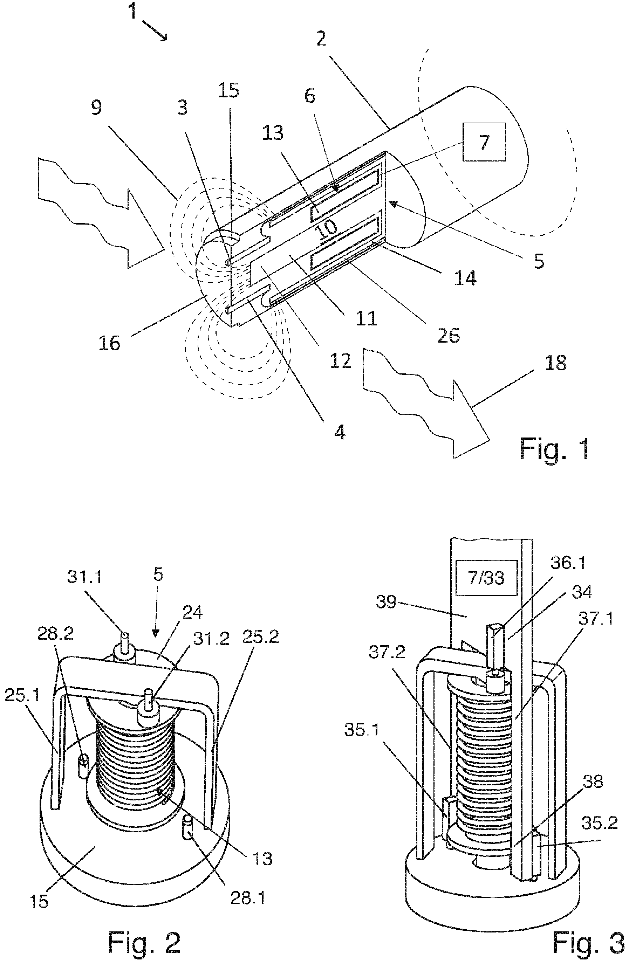

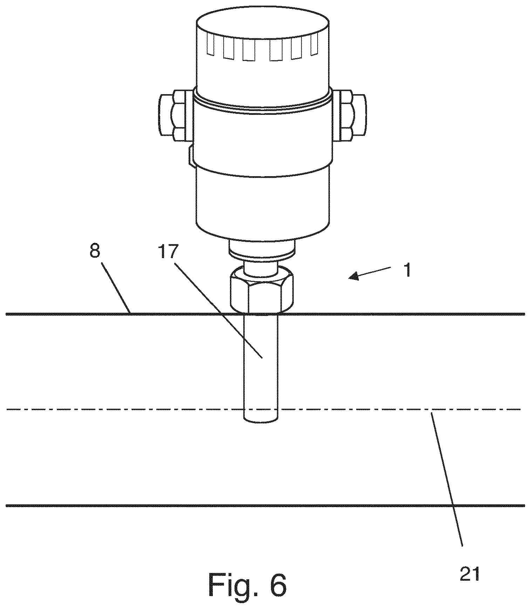

Anhand der perspektivischen und teilweise geschnittenen Darstellung der Fig. 1 wird zunächst das der Erfindung zugrunde liegende Messprinzip erläutert. Eine magnetisch-induktive Durchflussmesssonde 1 umfasst ein im allgemeinen kreiszylindrisches, einen vorgegebenen Außendurchmesser aufweisendes Gehäuse 2. Dieses ist an den Durchmesser einer Bohrung angepasst, die sich in einer Wand einer in Fig. 1 nicht, dagegen in Fig. 6 dargestellten Rohrleitung 8 befindet und in die die magnetisch-induktive Durchflussmesssonde 1 fluiddicht eingesteckt ist. In der Rohrleitung 8 strömt ein zu messendes fließfähiges Medium, in das die Durchflussmesssonde 1 praktisch senkrecht zur Strömungsrichtung des Mediums eintaucht, welches durch die gewellten Pfeile 18 angedeutet ist. Ein in das Medium ragender Gehäuseendabschnitt 16 des Gehäuses 2 ist mit einem Frontkörper 15 aus Isoliermaterial fluiddicht verschlossen. Mittels einer im Gehäuse 2 angeordneten Vorrichtung 5 zum Erzeugen eines Magnetfeldes lässt sich ein durch den Endabschnitt hindurch, in das Medium hineinreichendes Magnetfeld 9 erzeugen. Ein mindestens teilweise aus einem weichmagnetischen Material bestehender, im Gehäuse 2 angeordneter Spulenkern 11 bzw. ein am Spulenkern 11 endseitig befindlicher Polschuh 12 endet an oder in der Nähe des Gehäuseendabschnitt 16. Ein Feldrückführung 26 mit einem Feldrückführungskörper 14, der die Spulenanordnung 6 und den Spulenkern 11 umschließt, ist dazu eingerichtet das aus dem Gehäuseendabschnitt 16 hindurchreichende Magnetfeld 9 in das Gehäuse 2 zurückzuführen. Der Spulenkern 11, der Polschuh 12 und der Feldrückführungskörper 14 sind jeweils Feldführungskörper 10, welche zusammen eine Feldführungsanordnung bilden. Eine erste und eine zweite galvanische Messelektrode 3, 4 sind in dem Frontkörper 15 angeordnet und berühren das Medium. An den Messelektroden 3, 4 lässt sich eine aufgrund des Faraday'schen Induktionsgesetzes induzierte elektrische Spannung mittels einer Messschaltung abgreifen. Diese ist maximal, wenn die Durchflussmesssonde so in die Rohrleitung eingebaut ist, dass eine durch eine die beiden Messelektroden 3, 4 schneidende Gerade und eine Längsachse der Durchflussmesssonde aufgespannte Ebene senkrecht zu der Strömungsrichtung 18 bzw. Längsachse der Rohrleitung verläuft. Eine Betriebsschaltung 7 ist mit der Spulenanordnung 6, insbesondere mit der Spule 13 elektrisch verbunden und dazu eingerichtet ein getaktetes Anregungssignal auf die Spule 13 aufzuprägen, um somit ein getaktetes Magnetfeld 9 zu erzeugen.

Die Fig. 2 zeigt eine perspektivische Ansicht auf einen Teil einer ersten Ausgestaltung der erfindungsgemäßen magnetisch-induktiven Durchflussmesssonde. Gezeigt wird ein Frontkörper 15 mit angeordneten Messelektroden und den Messelektrodenkontaktierungselementen 28.1, 28.2 der jeweiligen Messelektroden. Die jeweiligen Messelektrodenkontaktierungselemente 28.1, 28.2 und Messelektroden können mehrteilig oder einteilig ausgebildet sein. Die jeweiligen Messelektrodenkontaktierungselemente 28.1, 28.2 können auch durch jeweilige Endabschnitte der Messelektroden gebildet sein. An einer dem Medium abgewandten Seite des Frontkörpers 15 ist eine Vorrichtung 5 zum Erzeugen eines den Frontkörper 15 durchsetzenden Magnetfeldes angeordnet. Die Vorrichtung 5 zum Erzeugen des Magnetfeldes umfasst eine Spulenanordnung aus einer Spule 13 und einem Spulenhalter 24. Die Spule 13 besteht aus einem auf die Spulenhalter 24 aufgewickelten Spulendraht. Die Enden des Spulendrahtes sind jeweils mit Spulenkontaktierungselementen 31.1, 31.2 verbunden oder bilden jeweils die Spulenkontaktierungselemente 31.1, 31.2. Die Spulenkontaktierungselemente 31.1, 31.2 verlaufen im Wesentlichen parallel zu einer Längsachse des Gehäuses. Zudem weist die Vorrichtung 5 zum Erzeugen des Magnetfeldes einen Feldführungskörper auf, bestehend aus zwei Feldführungskörperschenkel 25.1, 25.2 und einem Spulenkern, der sich durch eine Öffnung des Spulenhalters 24 erstreckt. Die zwei Feldführungskörperschenkel 25.1, 25.2 sind mit einem Ende des Spulenkerns verbunden. Die abgebildete Ausgestaltung zeigt einen monolithischen Feldführungskörper. Alternativ kann der Feldführungskörper mehrteilig ausgebildet sein, d.h. Spulenkern und Feldführungskörperschenkel 25 sind einzelne Bauteile, die zusammengesetzt werden und zusammen den Feldführungskörper bilden. Der Spulenhalter 24 und der Frontkörper 15 sind mehrteilig ausgebildet, sie können jedoch auch monolithisch geformt sein.

Die Fig. 3 zeigt eine perspektivische Ansicht auf einen Teil der ersten Ausgestaltung mit montierter Leiterplatte. Zusätzlich zu den Merkmalen der Fig. 2 weist der abgebildete Teil der erfindungsgemäßen magnetisch-induktiven Durchflussmesssonde zusätzlich eine Leiterplatte 34 auf, die zwei Spulengegenkontaktierungselemente 36.1, 36.2 (die 36.2 ist in Fig. 3 durch die Leiterplatte verdeckt-3) und zwei Messelektrodengegenkontaktierungselemente 35.1, 35.2 aufweist. Zudem besteht die Leiterplatte 34 aus einem zwei Leiterplattenschenkel 37.1, 37.2, die sich ausgehend von einem Leiterplattengrundkörper 39 in Richtung Frontkörper erstrecken. Die Leiterplattenschenkel 37.1, 37.2 weisen jeweils einen Leiterplattenschenkelendabschnitt 38 auf, in dem jeweils ein Messelektrodengegenkontaktierungselement 35.1, 35.2 angeordnet ist. Die Spulengegenkontaktierungselemente 36.1, 36.2 sind am Leiterplattengrundkörper 39 angeordnet. In der abgebildeten Ausgestaltung bilden die Spulengegenkontaktierungselemente 36.1, 36.2 mit den Spulenkontaktierungselementen eine Steckverbindung und die Messelektrodengegenkontaktierungselemente 35.1, 35.2 mit den Messelektrodenkontaktierungselementen eine Steckverbindung. Auf der Leiterplatte 34 ist eine Betriebsschaltung 7 und eine Messschaltung 33 angeordnet, wobei die Betriebsschaltung 7 über die Spulengegenkontaktierungselemente 36.1, 36.2 mit der Spule elektrisch verbunden ist und die Messschaltung 33 über die Messelektrodengegenkontaktierungselemente 35.1, 35.2 mit den Messelektroden elektrisch verbunden ist.

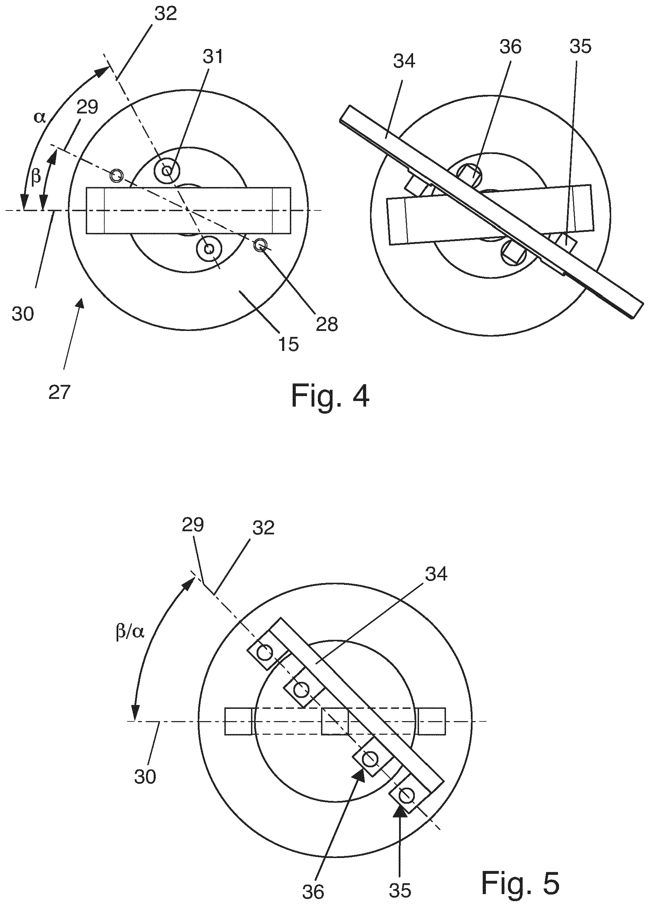

Die Fig. 4 zeigt eine erste Draufsicht auf eine orthogonale Projektion der Messelektroden und des Feldführungskörpers auf eine Querschnittsebene senkrecht zur Längsachse des Gehäuses der ersten Ausgestaltung. Die gestrichpunkteten Linien stellen jeweils die Gehäuselängsebene 29, Feldführungskörperlängsebene 30 und Spulenanordnungslängsebene 32 dar. Zwischen der Gehäuselängsebene 29 und der Feldführungskörperlängsebene 30 wird ein Winkel β aufgespannt. Erfindungsgemäß gilt 0° < *β* ≤ 90°, insbesondere 10° ≤ *β* ≤ 60° und bevorzugt 25° ≤ *β* ≤ 45°. Der Winkel *β* der abgebildeten Ausgestaltung liegt bei ca. 35°. Zwischen der Feldführungskörperlängsebene 30 und der Spulenanordnungslängsebene 32 wird ein Winkel *α* aufgespannt, für den 0° ≤ *α* ≤ 90°, insbesondere *α* ≥ 50° und bevorzugt *α* ≥ 75° gilt. Der Winkel *β* ist so gewählt, dass die Messelektrodenkontaktierungselemente 28 nicht durch den Feldführungskörper verdeckt werden und gleichzeitig, dass zwischen den Messelektroden erzeugte Magnetfeld ausreichend groß ist, um eine mittels der Vorrichtung zum Ermitteln der induzierten Messspannung detektierbare Messspannung im Medium zu induzieren. Die erste und zweite Draufsicht unterscheiden sich darin, dass in der zweiten Draufsicht eine Leiterplatte 34 mit Messelektrodengegenkontaktierungselementen 35 und Spulengegenkontaktierungselementen 36 auf den Frontkörper 15 aufgesteckt ist über den die Spulenkontaktierungselemente 31 und Messelektrodenkontaktierungselement 28 mit der Betriebsschaltung 7 und der Messschaltung 33 elektrisch verbunden sind. Die zwei Spulengegenkontaktierungselemente 36 sind jeweils auf unterschiedlichen Seiten der Leiterplatte 34 angeordnet. Gleich gilt auch für die Anordnung der zwei Messelektrodengegenkontaktierungselementen 35.

Die Fig. 5 zeigt eine Draufsicht auf eine orthogonale Projektion der Messelektroden und des Feldführungskörpers auf eine Querschnittsebene senkrecht zur Längsachse des Gehäuses einer zweiten Ausgestaltung. Die gestrichpunkteten Linien stellen jeweils die Gehäuselängsebene 29, Feldführungskörperlängsebene 30 und Spulenanordnungslängsebene 32 dar. Zwischen der Gehäuselängsebene 29 und der Feldführungskörperlängsebene 30 wird ein Winkel *β* aufgespannt. Erfindungsgemäß gilt 0° < *β* ≤ 90°, insbesondere 10° ≤ *β* ≤ 60° und bevorzugt 25° ≤ *β* ≤ 45°. Zwischen der Feldführungskörperlängsebene 30 und der Spulenanordnungslängsebene 32 wird ein Winkel *α* aufgespannt, für den 0° ≤ *α* ≤ 90°, insbesondere
*α* ≥ 50° und bevorzugt *α* ≥ 75° gilt. Gemäß der abgebildeten Ausgestaltung sind die Winkel *α* und *β* gleich gewählt, um eine Unabhängigkeit von der Herstellungstoleranz von Leiterplatten, insbesondere der Leiterplattendicke zu erreichen. Dafür sind auch die zwei Messelektrodengegenkontaktierungselemente 35 und Spulengegenkontaktierungselemente 36 auf einer gemeinsamen Seite der Leiterplatte 34 angeordnet.

Die Fig. 6 zeigt eine schematische Darstellung einer Messstellung mit erfindungsgemäßen magnetisch-induktiven Durchflussmesssonde 1, eingesetzt in eine Rohrleitung 8 mit einer Rohrlängsachse 21. Ein mediumsberührende Abschnitt des Gehäuses ist elektrisch leitfähig ausgebildet und als Bezugselektrode 17 eingerichtet.

### Bezugszeichenliste

- 1: magnetisch-induktives Durchflussmesssonde
- 2: Gehäuse
- 3: Messelektrode
- 4: Messelektrode
- 5: Vorrichtung zum Erzeugen eines Magnetfeldes
- 6: Spulenanordnung
- 7: Betriebsschaltung
- 8: Rohrleitung
- 9: Magnetfeld
- 10: Feldführungskörper
- 11: Spulenkern
- 12: Polschuh
- 13: Spule
- 14: Feldrückführungskörper
- 15: Frontkörper
- 16: Gehäuseendabschnitt
- 17: Bezugselektrode
- 18: Strömungsrichtung des Mediums
- 21: Rohrlängsachse
- 24: Spulenhalter
- 25: Feldführungskörperschenkel
- 26: Feldrückführung
- 27: Querschnittsebene
- 28: Messelektrodenkontaktierungselement
- 29: Gehäuselängsebene
- 30: Feldführungskörperlängsebene
- 31: Spulenkontaktierungselemente
- 32: Spulenanordnungslängsebene
- 33: Messschaltung
- 34: Leiterplatte
- 35: Messelektrodengegenkontaktierungselemente
- 36: Spulengegenkontaktierungselemente
- 37: Leiterplattenschenkel
- 38: Leiterplattenschenkelendabschnitt
- 39: Leiterplattengrundkörper

## Patentansprüche

1. Magnetisch-induktive Durchflussmesssonde zum Einsetzen in eine Öffnung einer von einem fließfähigen Medium durchströmten Rohrleitung (8) und zum Ermitteln einer strömungsgeschwindigkeitsabhängigen Messgröße eines fließfähigen Mediums, umfassend:
- ein Gehäuse (2), welches dazu eingerichtet ist mit dem Medium beaufschlagt zu werden,
wobei das Gehäuse (2) einen Gehäuseendabschnitt (16) aufweist,
wobei das Gehäuse (2) eine Gehäusehülle umfasst, die ein Gehäuseinneres begrenzt;
- zwei im Gehäuseendabschnitt (16) angeordnete Messelektroden (3, 4) zum Bilden eines galvanischen Kontaktes mit dem Medium und zum Abgreifen einer induzierten Spannung im fließenden Medium,
wobei die zwei Messelektroden (3, 4) jeweils ein Messelektrodenkontaktierungselement (28.1, 28.2) aufweisen, welches in das Gehäuseinnere hineinragt;
wobei eine Gehäuselängsebene (29) durch die zwei Messelektrodenkontaktierungselemente (28.1, 28.2) verläuft;
- eine Vorrichtung (5) zum Erzeugen eines den Gehäuseendabschnitt (16) durchsetzenden Magnetfeldes,
wobei die Vorrichtung (5) im Gehäuseinneren angeordnet ist,
wobei die Vorrichtung (5) eine Spulenanordnung (6) und einen Feldführungskörper (10) umfasst,
wobei die Spulenanordnung (6) eine Öffnung umfasst,
wobei der Feldführungskörper (10) einen Spulenkern (11) umfasst, welcher sich durch die Öffnung erstreckt,
wobei der Feldführungskörper (10) zwei mit dem Spulenkern (11) verbundene Feldführungskörperschenkel (25.1, 25.2) aufweist, welche sich bis zu einem Frontabschnitt des Gehäuses (2) erstrecken und dazu eingerichtet sind, als Feldrückführung (26) zu dienen,
**dadurch gekennzeichnet, dass**
eine orthogonale Projektion der Messelektroden (3, 4) und eine orthogonale Projektion des Feldführungskörpers (10) auf eine Querschnittsebene (27) senkrecht zu einer Längsachse des Gehäuses disjunkt sind.

2. Magnetisch-induktive Durchflussmesssonde nach Anspruch 1,
wobei eine Feldführungskörperlängsebene (30) durch die zwei Feldführungskörperschenkel (25.1, 25.2) verläuft,
wobei die Gehäuselängsebene (29) und Feldführungskörperlängsebene (30) einen Winkel *β* aufspannen mit 0° < *β* ≤ 90°, insbesondere
10° ≤ *β* ≤ 60° und bevorzugt 25° ≤ *β* ≤ 45°.

3. Magnetisch-induktive Durchflussmesssonde nach Anspruch 1 und/oder 2,
wobei die Feldführungskörperschenkel (25) zumindest teilweise streifenförmig ausgebildet sind, und/oder
wobei der Feldführungskörper (10) genau zwei senkrecht zueinander stehende Spiegelebenen aufweist,
wobei eine der zwei Spiegelebenen und die Feldführungskörperlängsebene (30) übereinstimmen.

4. Magnetisch-induktive Durchflussmesssonde nach Anspruch 1 und/oder 2,
wobei die Spulenanordnung (6) eine Spule (13), einen Spulenhalter (24) und zwei Spulenkontaktierungselemente (31.1, 31.2) umfasst,
wobei die Spulenkontaktierungselemente (31.1, 31.2) jeweils mit einem auf den Spulenhalter (24) aufgewickelten und die Spule (13) bildenden Spulendraht verbunden sind,
wobei die zwei Spulenkontaktierungselemente (31.1, 31.2) am Spulenhalter (24), insbesondere an einer dem Gehäuseendabschnitt (16) abgewandten Seite angeordnet sind,
wobei eine Spulenanordnungslängsebene (32) durch die zwei Spulenkontaktierungselemente (31.1, 31.2) verläuft,
wobei eine Feldführungskörperlängsebene (30) durch die zwei Feldführungskörperschenkel (25.1, 25.2) verläuft,
wobei die Feldführungskörperlängsebene (30) und die Spulenanordnungslängsebene (32) einen Winkel *α* aufspannen mit
0° ≤ *α* ≤ 90°, insbesondere *α* ≥ 50° und bevorzugt *α* ≥ 75°.

5. Magnetisch-induktive Durchflussmesssonde nach den Ansprüchen 1 bis 4,
wobei eine Schnittgerade der Gehäuselängsebene (29) und der Feldführungskörperlängsebene (30) mit einer Längsachse des Gehäuses (2) übereinstimmen, und/oder
wobei eine Schnittgerade der Gehäuselängsebene (29) und der Spulenanordnungslängsebene (32) mit der Längsachse des Gehäuses (2) übereinstimmen.

6. Magnetisch-induktive Durchflussmesssonde nach mindestens einem der vorhergehenden Ansprüche, umfassend:
- eine Messschaltung (33) zum Ermitteln einer an den zwei Messelektroden (3, 4) induzierten Messspannung,
wobei die Messschaltung (33) im Gehäuseinneren angeordnet und mit den Messelektrodenkontaktierungselementen (28), insbesondere mechanisch und elektrisch trennbar verbunden ist,
wobei die Messschaltung (33) auf einer Leiterplatte (34) angeordnet ist,
wobei die Leiterplatte (34) komplementär zu den Messelektrodenkontaktierungselementen (28) ausgebildete Messelektrodengegenkontaktierungselemente (35) aufweist,
wobei die Messelektrodengegenkontaktierungselemente (35) mit den Messelektrodenkontaktierungselementen (28) eine Steckverbindung bilden.

7. Magnetisch-induktive Durchflussmesssonde nach mindestens einem der Ansprüche 4 bis 6, umfassend:
- eine Betriebsschaltung (7) zum Betreiben der Spulenanordnung (6),
wobei die Betriebsschaltung (7) im Gehäuseinneren angeordnet und mit der Spulenanordnung (6), insbesondere mechanisch und elektrisch trennbar verbunden ist,
wobei die Betriebsschaltung (7) auf einer Leiterplatte (34) angeordnet ist,
wobei die Leiterplatte (34) komplementär zu den Spulenkontaktierungselementen (31) ausgebildete Spulengegenkontaktierungselemente (36) aufweist,
wobei die Spulengegenkontaktierungselemente (36) mit den Spulenkontaktierungselementen (31) eine Steckverbindung bilden.

8. Magnetisch-induktive Durchflussmesssonde nach Anspruch 6 und/oder 7,
wobei die Leiterplatte (34) zwei Leiterplattenschenkel (37.1, 37.2) aufweist mit jeweils einem Leiterplattenschenkelendabschnitt (38),
wobei sich die Leiterplattenschenkel (37.1, 37.2) ausgehend von einem Leiterplattengrundkörper (39) in Richtung Frontabschnitt des Gehäuses (2) erstrecken,
wobei die zwei Messeelektrodengegenkontaktierungselemente (35.1, 35.2) jeweils in einem der zwei Leiterplattenschenkelendabschnitte (38) angeordnet sind.

9. Magnetisch-induktive Durchflussmesssonde nach Anspruch 7 und/oder 8,
wobei die zwei Spulengegenkontaktierungselemente (36.1, 36.2) am Leiterplattengrundkörper (39) angeordnet sind.

10. Magnetisch-induktive Durchflussmesssonde nach den Ansprüchen 6 bis 9,
wobei die Leiterplatte (34) zwei voneinander abgewandte Seiten aufweist,
wobei die Spulengegenkontaktierungselemente (36.1, 36.2) jeweils auf unterschiedlichen Seiten der Leiterplatte (34) angeordnet sind, und/oder
wobei die Messelektrodengegenkontaktierungselemente (35.1, 35.2) jeweils auf unterschiedlichen Seiten der Leiterplatte (34) angeordnet sind.

11. Magnetisch-induktive Durchflussmesssonde nach den Ansprüchen 6 bis 9,
wobei die Leiterplatte (34) zwei voneinander abgewandte Seiten aufweist,
wobei die Spulengegenkontaktierungselemente (36.1, 36.2) jeweils auf gleichen Seiten der Leiterplatte (34) angeordnet sind, und/oder
wobei die Messelektrodengegenkontaktierungselemente (35.1, 35.2) jeweils auf gleichen Seiten der Leiterplatte (34) angeordnet sind.

## Claims

1. Magnetic-inductive flow measuring probe for insertion into an opening of a pipe (8) through which a flowable medium flows and for determining a flow rate of the medium. flow velocity-dependent measurand of a flowable medium,
comprehensive:
- a housing (2) which is designed to be pressurized with the medium,
wherein the housing (2) has a housing end section (16),
wherein the housing (2) comprises a housing shell which defines an interior of the housing;
- two measuring electrodes (3, 4) arranged in the housing end section (16) for forming a galvanic contact with the medium and for tapping an induced voltage in the flowing medium,
wherein the two measuring electrodes (3, 4) each have a measuring electrode contact element (28.1, 28.2) which projects into the interior of the housing;
wherein a longitudinal plane (29) of the housing extends through the two measuring electrode contact elements (28.1, 28.2);
- a device (5) for generating a housing end portion (16)
magnetic field,
wherein the device (5) is arranged inside the housing,
wherein the device (5) comprises a coil arrangement (6) and a field guide body (10),
wherein the coil arrangement (6) comprises an opening,
wherein the field guide body (10) comprises a coil core (11) which extends through the opening,
wherein the field guide body (10) has two field guide body legs (25.1, 25.2) which are connected to the coil core (11), extend up to a front section of the housing (2) and are set up to act as a field return (26),
**characterized in that** an orthogonal projection of the measuring electrodes (3, 4) and an orthogonal projection of the field guide body (10) onto a cross-sectional plane (27) perpendicular to a longitudinal axis of the housing are disjoint.

2. Electromagnetic flowmeter probe according to claim 1,
wherein a field guide body longitudinal plane (30) runs through the two field guide body legs (25.1, 25.2),
wherein the longitudinal plane (29) of the housing and the longitudinal plane (30) of the field guide body span an angle *β* with 0° < *β* ≤ 90°, in particular 10° ≤ *β* ≤ 60° and preferably 25° ≤ *β* ≤ 45°.

3. Electromagnetic flowmeter probe according to claim 1 and/or 2,
wherein the field guide body legs (25) are at least partially strip-shaped, and/or
wherein the field guide body (10) has exactly two mirror planes perpendicular to one another,
where one of the two mirror planes and the longitudinal plane (30) of the field guide body coincide.

4. Electromagnetic flowmeter probe according to claim 1 and/or 2,
wherein the coil arrangement (6) comprises a coil (13), a coil holder (24) and two coil contacting elements (31.1, 31.2),
wherein the coil contacting elements (31.1, 31.2) are each connected to a coil wire wound on the coil holder (24) and forming the coil (13)
are,
wherein the two coil contacting elements (31.1, 31.2) are arranged on the coil holder (24), in particular on a side facing away from the housing end section (16),
wherein a coil arrangement longitudinal plane (32) passes through the two coil arrangement planes (32).
contacting elements (31.1, 31.2),
wherein a field guide body longitudinal plane (30) runs through the two field guide body legs (25.1, 25.2),
wherein the longitudinal plane (30) of the field guide body and the longitudinal plane (32) of the coil arrangement span an angle *α* with
0° ≤ *α* ≤ 90°, in particular *α* ≥ 50° and preferably *α* ≥ 75°.

5. Magnetic-inductive flow measuring probe according to claims 1 to 4,
wherein a straight line of intersection of the longitudinal plane (29) of the housing and the longitudinal plane (30) of the field guide body with a longitudinal axis of the housing (2) match, and/or
wherein a straight line of intersection of the longitudinal plane (29) of the housing and the longitudinal plane (32) of the coil arrangement coincides with the longitudinal axis of the housing (2).

6. Magnetic-inductive flow measuring probe according to at least one of the preceding claims, comprising:
- a measuring circuit (33) for determining a measuring voltage induced at the two measuring electrodes (3, 4),
wherein the measuring circuit (33) is arranged in the interior of the housing and is connected to the measuring electrode contact elements (28), in particular mechanically and electrically is separably connected,
wherein the measuring circuit (33) is arranged on a printed circuit board (34),
wherein the printed circuit board (34) has measuring electrode counter-contacting elements (35) which are complementary to the measuring electrode contacting elements (28),
the measuring electrode counter-contact elements (35) being connected to the measuring electrode contact elements (28) form a plug-in connection.

7. An electromagnetic flowmeter probe according to at least one of claims 4 to 6, comprising:
- an operating circuit (7) for operating the coil arrangement (6),
wherein the operating circuit (7) is arranged in the interior of the housing and is connected to the coil arrangement (6), in particular in a mechanically and electrically separable manner,
wherein the operating circuit (7) is arranged on a printed circuit board (34),
the printed circuit board (34) being complementary to the coil contacting elements (31) has coil counter-contacting elements (36),
wherein the coil counter-contacting elements (36) form a plug-in connection with the coil contacting elements (31).

8. Magnetic-inductive flow measuring probe according to claim 6 and/or 7,
wherein the printed circuit board (34) has two printed circuit board legs (37.1, 37.2) each with a printed circuit board leg end section (38),
wherein the printed circuit board legs (37.1, 37.2) extend from a printed circuit board base body (39) in the direction of the front section of the housing (2),
wherein the two measuring electrode counter-contact elements (35.1, 35.2) are each arranged in one of the two circuit board leg end sections (38).

9. Magnetic-inductive flow measuring probe according to claim 7 and/or 8,
wherein the two coil counter-contacting elements (36.1, 36.2) are arranged on the circuit board base body (39).

10. Magnetic-inductive flowmeter probe according to claims 6 to 9, wherein the
printed circuit board (34) has two sides facing away from each other,
wherein the coil counter-contact elements (36.1, 36.2) are each arranged on different sides of the printed circuit board (34), and/or
wherein the measuring electrode counter-contact elements (35.1, 35.2) are each arranged on different sides of the printed circuit board (34).

11. Magnetic-inductive flow measuring probe according to claims 6 to 9,
wherein the printed circuit board (34) has two sides facing away from each other,
wherein the coil counter-contact elements (36.1, 36.2) are each arranged on the same sides of the printed circuit board (34), and/or
wherein the measuring electrode counter-contact elements (35.1, 35.2) are each mounted on are arranged on the same sides of the printed circuit board (34).

## Revendications

1. Sonde de mesure de débit magnéto-inductive destinée à être placée dans une ouverture d'une conduite (8) traversée par un milieu fluide et à déterminer une grandeur de mesure dépendant de la vitesse d'écoulement d'un milieu fluide, comprenant:
- un boîtier (2) qui est conçu pour être alimenté en fluide,
dans lequel le boîtier (2) comprend une partie d'extrémité de boîtier (16),
dans lequel le boîtier (2) comprend une enveloppe de boîtier qui délimite un intérieur de boîtier ;
- deux électrodes de mesure (3, 4) disposées dans la partie d'extrémité (16) du boîtier pour former un contact galvanique avec le milieu et pour prélever une tension induite dans le milieu qui s'écoule,
les deux électrodes de mesure (3, 4) présentant chacune un élément de contact d'électrode de mesure (28.1, 28.2) qui pénètre à l'intérieur du boîtier ;
un plan longitudinal de boîtier (29) passant par les deux éléments de contact d'électrode de mesure (28.1, 28.2) ;
- un dispositif (5) pour produire une partie d'extrémité (16) du boîtier champ magnétique traversant,
le dispositif (5) étant disposé à l'intérieur du boîtier,
dans lequel le dispositif (5) comprend un ensemble de bobines (6) et un corps de guidage de champ (10),
dans lequel l'ensemble de bobines (6) comprend une ouverture,
dans lequel le corps de guidage de champ (10) comprend un noyau de bobine (11) qui s'étend à travers l'ouverture,
dans lequel le corps de guidage de champ (10) comprend deux branches de corps de guidage de champ (25.1, 25.2) reliées au noyau de bobine (11), qui s'étendent jusqu'à une partie avant du boîtier (2) et qui sont adaptées pour servir de servir de retour de terrain (26),
**caractérisé en ce que** une projection orthogonale des électrodes de mesure (3, 4) et une projection orthogonale du corps de guidage de champ (10) sur un plan de section transversale (27) perpendiculaire à un axe longitudinal du boîtier sont disjointes.

2. Sonde de débit magnéto-inductive selon la revendication 1,
dans lequel un plan longitudinal de corps de guidage de champ (30) passe par les deux branches de corps de guidage de champ (25.1, 25.2),
le plan longitudinal du boîtier (29) et le plan longitudinal du corps de guidage de champ (30) formant un angle *β* avec 0° < *β* ≤ 90°, en particulier 10° ≤ *β* ≤ 60° et de préférence 25° ≤ *β* ≤ 45°.

3. Sonde de débit magnéto-inductive selon la revendication 1 et/ou 2,
les branches du corps de guidage de champ (25) étant réalisées au moins partiellement en forme de bande, et/ou
le corps de guidage de champ (10) présentant exactement deux plans de miroir perpendiculaires entre eux,
dans lequel l'un des deux plans de miroir et le plan longitudinal du corps de guidage de champ (30) coïncident.

4. Sonde de débit magnéto-inductive selon la revendication 1 et/ou 2,
l'ensemble de bobines (6) comprenant une bobine (13), un support de bobine (24) et deux éléments de contact de bobine (31.1, 31.2),
les éléments de contact de bobine (31.1, 31.2) étant respectivement reliés à un fil de bobine enroulé sur le porte-bobine (24) et formant la bobine (13) sont
les deux éléments de contact de bobine (31.1, 31.2) étant disposés sur le support de bobine (24), en particulier sur un côté opposé à la section d'extrémité de boîtier (16),
dans lequel un plan longitudinal d'agencement de bobines (32) passe par les deux plans de bobines (32).
(31.1, 31.2),
dans lequel un plan longitudinal de corps de guidage de champ (30) passe par les deux branches de corps de guidage de champ (25.1, 25.2),
dans lequel le plan longitudinal du corps de guidage de champ (30) et le plan longitudinal de l'ensemble de bobines (32) forment un angle *α* avec 0° ≤ *α* ≤ 90°, en particulier *α* ≥ 50° et de préférence *α* ≥ 75°.

5. Sonde de mesure de débit magnéto-inductive selon les revendications 1 à 4,
une droite d'intersection du plan longitudinal (29) du boîtier et du plan longitudinal (30) du corps de guidage de champ avec un axe longitudinal du boîtier (2) correspondent, et/ou
dans lequel une droite d'intersection du plan longitudinal (29) du boîtier et du plan longitudinal (32) de l'agencement de la bobine coïncide avec l'axe longitudinal du boîtier (2).

6. Sonde de mesure de débit magnéto-inductive selon au moins l'une des méthodes suivantes
revendications précédentes, comprenant :
- un circuit de mesure (33) pour déterminer une tension de mesure induite sur les deux électrodes de mesure (3, 4),
le circuit de mesure (33) étant disposé à l'intérieur du boîtier et relié aux éléments de contact d'électrode de mesure (28), en particulier mécaniquement et électriquement. est lié de manière séparable,
le circuit de mesure (33) étant disposé sur une carte de circuit imprimé (34),
la carte de circuit imprimé (34) présentant des éléments de contre-contact d'électrode de mesure (35) formés de manière complémentaire aux éléments de contact d'électrode de mesure (28),
les éléments de contre-contact d'électrode de mesure (35) étant reliés aux des éléments de contact de l'électrode de mesure (28) forment une connexion enfichable.

7. Sonde de mesure de débit magnéto-inductive selon au moins l'une des revendications 4 à 6, comprenant :
- un circuit de fonctionnement (7) pour faire fonctionner l'ensemble de bobines (6),
le circuit de fonctionnement (7) étant disposé à l'intérieur du boîtier et étant relié à l'ensemble de bobines (6), en particulier de manière séparable mécaniquement et électriquement,
le circuit de fonctionnement (7) étant disposé sur une carte de circuit imprimé (34),
la carte de circuit imprimé (34) étant complémentaire des éléments de contact de bobine (31),
dans lequel les éléments de contre-contact de bobine (36) forment une connexion enfichable avec les éléments de contact de bobine (31).

8. Sonde de mesure de débit magnéto-inductive selon la revendication 6 et/ou 7,
la carte de circuit imprimé (34) présentant deux branches de carte de circuit imprimé (37.1, 37.2) avec chacune une section d'extrémité de branche de carte de circuit imprimé (38),
les branches (37.1, 37.2) du circuit imprimé s'étendant à partir d'un corps de base (39) du circuit imprimé en direction de la partie avant du boîtier (2),
les deux éléments de contre-contact d'électrodes de mesure (35.1, 35.2) sont respectivement disposés dans l'une des deux parties d'extrémité de branche de carte de circuit imprimé (38).

9. Sonde de mesure de débit magnéto-inductive selon la revendication 7 et/ou 8,
les deux éléments de contre-contact de bobine (36.1, 36.2) étant disposés sur le corps de base de la carte de circuit imprimé (39).

10. Sonde de mesure de débit magnéto-inductive selon les revendications 6 à 9,
dans laquelle la carte de circuit imprimé (34) présente deux côtés
opposés l'un à l'autre,
les éléments de contre-contact de bobine (36.1, 36.2) étant disposés respectivement sur des côtés différents de la carte de circuit imprimé (34), et/ou
les éléments de contre-contact d'électrode de mesure (35.1. 35.2) étant respectivement disposés sur difféerents côtés de la carte de la carte de circuit imprimé (34).

11. Sonde de mesure de débit magnéto-inductive selon les revendications 6 à 9,
dans lequel la carte de circuit imprimé (34) présente deux côtés opposés l'un à l'autre,
les éléments de contre-contact de bobine (36.1, 36.2) étant disposés respectivement sur des côtés identiques de la carte de circuit imprimé (34), et/ou
les éléments de contre-contact d'électrode de mesure (35.1, 35.2) étant respectivement sur même côté de la carte de circuit imprimé (34).
